# NEUE EUROPÄISCHE PATENTSCHRIFT

(11) **EP 0 695 400 B2**
(45) Veröffentlichungstag und Bekanntmachung des Hinweises auf die Entscheidung über den Einspruch: **27.03.2002**
(45) Hinweis auf die Patenterteilung: 27.12.1996
(21) Anmeldenummer: 94912546.2
(22) Anmeldetag: 26.03.1994
(51) Int. Cl.: F16C 29/00, F16C 29/04, F16C 29/06

(54) **FÜHRUNGSSCHIENE FÜR ROLLENDE LASTENTRÄGER**
TRACKWAY FOR RAILBORNE LOAD-CARRYING UNIT
RAIL DE GUIDAGE POUR PORTE-CHARGES ROULANTS

(30) Priorität: 21.04.1993 DE 4313074
(43) Veröffentlichungstag der Anmeldung: 07.02.1996
(73) Patentinhaber: INA Wälzlager Schaeffler KG, 91074 Herzogenaurach (DE)
(72) Erfinder: SCHEIB, Frank, D-66540 Neunkirchen (DE); BRUNK, Michael, D-66773 Schwalbach (DE); KLEBER, Rainer, D-67742 Sulzbach (DE)
(86) Internationale Anmeldenummer: EP9400962
(87) Internationale Veröffentlichungsnummer: WO9424444

(56) Entgegenhaltungen:
- EP-B- 0 213 160
- WO-A-92/12353
- DE-A- 3 631 401
- DE-A- 3 839 091
- DE-A- 3 937 815
- DE-A- 4 111 551
- DE-A- 4 118 479
- DE-U- 9 011 413
- DE-U- 9 211 223
- FR-A- 2 559 560
- FR-A- 2 639 081

## Beschreibung

Die Erfindung betrifft eine Führungsschiene für rollende Lastenträger mit einem als stranggepreßtes Hohlkammerprofil ausgebildeten Trägerkörper und wenigstens einer in einer Aufnahmenut des Trägerkörpers angeordneten Laufschiene, wobei der Hohlraum des Trägerkörpers durch einen Quersteg in eine untere Kammer und eine obere Kammer aufgeteilt ist und an dem Trägerkörper eine Außenwand der unteren Kammer parallel zu dem Quersteg verläuft.

Aus dem Dokument EP-B-0 213 160 ist eine ähnliche Führungsschiene bekannt. Sie weist zwei parallele Laufschienen auf, die in nach außen geöffnete parallele Aufnahmenuten des Trägerkörpers eingesetzt und dort befestigt sind. Diese Laufschienen bilden die Laufbahnen von Rollkörpem oder Wälzkörpern eines an der Führungsschiene längsverschieblich gelagerten Führungswagens, der als Lastenträger wirkt. Bei dieser vorbekannten Führungsschiene ist der Trägerkörper jedoch ein massives Bauteil, so daß für seine Herstellung ein beträchtlicher Materialbedarf besteht. Ein Großteil der Anwender solcher Führungsschienen benötigt jedoch die Biegesteifigkeit der massiven Führungsschiene nicht, oder er kann die Führungsschiene jeweils über ihre Gesamtlänge so unterstützen, daß sich reduzierte Flächenträgheitsmomente nicht negativ auswirken.

Aus dem Dokument CH-A-557 483 ist eine Vorrichtung zur geradlinigen Führung eines Maschinenelements bekannt, deren Führungsschiene hohl ausgeführt ist. Zu diesem Zweck ist ein I-Profilträger von zwei in bestimmter Weise ausgeformten Profilblechen umgeben, so daß sich zwei dem Profilträger benachbarte Hohlräume ergeben. Diese Profilbleche weisen an ihren Außenseiten jeweils zwei Kugellaufbahnen auf und sind damit Teil eines Linearwälzlagers. Die Herstellung einer solchen Führungsschiene hat den Nachteil, daß sie wegen der besonderen Ausbildung des I-Profilträgers an zwei Längsseiten und vor allem durch die komplizierte Form der Profilbleche in der Herstellung sehr aufwendig ist.

Aus dem Dokument DE-U-90 11 413 ist eine Führungsschiene der eingangs genannten Art bekannt. In dem dort verwendeten Trägerkörper sind hinterschnittene Längsnuten für die Aufnahme von Laufschienen angeordnet. Die Längsnuten sind von der Innenseite der oberen Kammer zugänglich. Jeweils im Bereich einer solchen Längsnut für eine Laufschiene befindet sich in dem Trägerkörper außerdem eine von der Außenseite zugängliche Längsnut, die zum Verbinden des Trägerkörpers mit anderen Konstruktionsteilen vorgesehen ist. Sie muß daher maßgenau sein. Im Querschnitt ist dieser Trägerkörper im wesentlichen U-förmig ausgebildet, wobei sich an dem waagerechten Quersteg zwei aufragende U-Schenkel anschließen. Daher ist die obere Kammer des Trägerkörpers nur an drei Seiten geschlossen und weist an der vierten Seite, der Oberseite, einen Längsschlitz auf. Die Folge ist, daß dieser Trägerkörper nicht die hohe Biegesteifigkeit hat, wie sie ein geschlossenes Hohlprofil bietet.

Der Erfindung liegt die Aufgabe zugrunde, eine einfache Herstellung einer Führungsschiene für rollende Lastenträger zu ermöglichen, deren Laufschienen über die gesamte Länge der Führungsschiene einen exakt konstanten Abstand voneinander haben.

Diese Aufgabe wird erfindungsgemäß durch die Merkmale des Anspruchs 1 gelöst.

Ein speziell ausgebildeter Nutgrund der beiden Aufnahmenuten einer Führungsschiene für die Laufschienen ermöglicht das Maßkalibrieren und damit ein kostengünstiges spanloses Herstellverfahren. Durch die Hohlkammer oder Kammern im Kalibrierbereich wird die Möglichkeit geschaffen, den für den Trägerkörper erforderlichen Toleranzfeldbereich der Strangpreßprofilhersteller auf Maß zu kalibrieren, wobei speziell durch das Hohlprofil ein sehr hoher Grad an plastischer Verformung des Trägerkörpers erreicht wird. Die durch das Maßkalibrieren erreichte plastische Verformung des Werkstoffes des Trägerkörpers ermöglicht, daß die beiden aufschiener über die gesamte Lange der Führungsschiene einen exakt konstanten Abstand voneinander bekommen. Bei in die Aufnahmenuten eingerollten Laufschienen haben diese dann eine so geringe Toleranzabweichung, daß der Führungswagen für dieses System mit vier zentrischen Laufrollenbolzen hergestellt werden kann. Mit so geringen Toleranzabweichungen ist der Vorteil verbunden, daß die Laufschienen sich kostengünstig durch Stoßen herstellen lassen und die Austauschbarkeit der Schienen untereinander möglich ist. Der Einsatz von vier zentrischen Bolzen bewirkt eine Kostenreduzierung bei der Herstellung des Wagens und hat den Vorteil, daß der Wagen beim Hersteller fertig eingestellt werden kann und beim Kunden nur noch auf die Schiene aufgeschoben zu werden braucht.

Die Befestigung der Laufschienen in den Aufnahmenuten des Trägerkörpers braucht nicht durch Einrollen zu erfolgen. Die Aufnahmenuten könnten auch so gestaltet sein, daß durch elastisches Aufbiegen ihrer U-Schenkel die Laufschienen durch deren Rückstellkräfte gehalten werden. Der Trägerkörper weist im Fußbereich eine mittlere Freistellung auf, welche der Erhöhung der Montagegenauigkeit dient. Seitliche Anschlagflächen im Fußbereich des Trägerkörpers dienen zum besseren Ausrichten der Führungsschiene bei der Montage.

Hohlkammerprofile sind als Halbzeuge auf dem Markt leicht verfügbar, sie können beispielsweise aus Nichteisenmetallen, insbesondere aus einer Aluminiumlegierung bestehen. Die Laufschiene, die in der Aufnahmenut eines solchen Trägerkörpers angeordnet und dort befestigt wird, kann eine Stahlschiene sein oder aus einem anderen hochfesten verschleißarmen Werkstoff bestehen. In den meisten Fällen werden an dem Trägerkörper zwei parallele Laufschienen in Aufnahmenuten angeordnet, um eine sichere Führung des rollenden Lastenträgers zu ermöglichen.

Der Hohlraum des Trägerkörpers ist durch einen Quersteg in eine obere Kammer und eine untere Kammer aufgeteilt. Wenn an dem Trägerkörper eine Außenwand der oberen Kammer und eine Außenwand der unteren Kammer sowie der Quersteg mehrere Gruppen von fluchtenden Bohrungen aufweisen, so läßt sich eine solche Führungsschiene in einfacher Weise mit in die Bohrungen eingesteckten Befestigungsschrauben an der Anschlußkonstruktion befestigen. In diesem Fall ist es vorteilhaft, wenn der Quersteg eine die obere Kammer begrenzende ebene Auflagefläche für die Schraubenköpfe der Befestigungsschrauben aufweist

Die erfindungsgemäße Führungsschiene ermöglicht es infolge ihrer Ausbildung als Hohlkammerprofil, in den Kammem beispielsweise Kabel oder Leitungen von Endschaltern zu verlegen, so daß diese geschützt angeordnet sind. Die zur Außenseite hin offenen Bohrungen zum Durchstecken der Befestigungsschrauben lassen sich in einfacher Weise durch Verschlußkappen verschließen, nachdem die Befestigungsschrauben eingeführt worden sind. Es ist aber auch möglich, die Führungsschiene mit Klemmelementen an der Anschlußkonstruktion zu befestigen, wobei die Klemmelemente im Fußbereich der Führungsschiene an dieser angreifen. Auf diese Weise brauchen die Kammern der Führungsschiene nicht durch Bohrungen nach außen geöffnet zu werden, so daß sie als Druckkammem genutzt werden können.

Ausführungsbeispiele der Erfindung sind in der Zeichnung dargestellt und werden im folgenden näher beschrieben. Es zeigen:
- Figur 1: eine stimseitige Ansicht eines Trägerkörpers für eine Führungsschiene in einer ersten Ausführungsform;
- Figur 2: eine perspektivische Ansicht einer Führungsschiene in einer zweiten Ausführungsform und
- Figur 3: eine stimseitige Ansicht der Führungsschiene nach Figur 2.

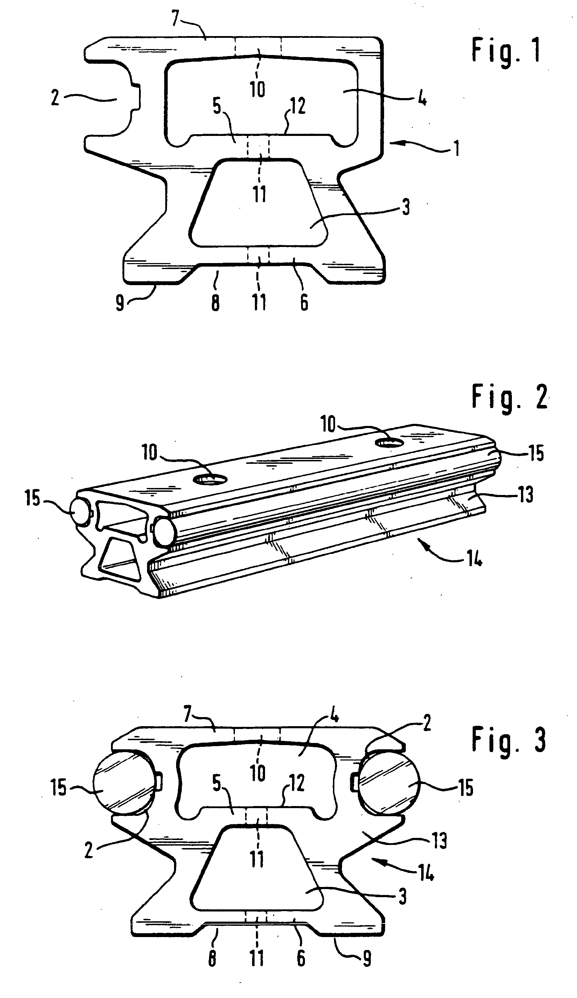

Der Trägerkörper 1 gemäß Figur 1 der Zeichnung ist als Hohlkammerprofil mit nur einer Aufnahmenut 2 für eine Laufschiene ausgebildet. Er weist eine untere Kammer 3 und eine obere Kammer 4 auf, die voneinander durch einen waagerechten Quersteg 5 getrennt sind. Parallel zu dem Quersteg 5 verlaufen eine Außenwand 6 der unteren Kammer 3 und eine Außenwand 7 der oberen Kammer 4. Unterhalb der Außenwand 6 befindet sich eine Freistellung 8 der Fußfläche 9 des Trägerkörpers 1. In der Mitte des Trägerkörpers 1 sind mehrere Gruppen von fluchtenden senkbrechten Bohrungen in Abständen hintereinander angeordnet. So fluchtet jeweils eine Bohrung 10 der Außenwand 7 mit zwei Bohrungen 11 des Quersteges 5 und der Außenwand 6. Durch die Bohrung 10 läßt sich jeweils eine Befestigungsschraube in die Kammern 3 und 4 des Trägerkörpers 1 einführen, mit welcher der Trägerkörper an der Anschlußkonstruktion befestigt wird, an welcher er mit seiner Fußfläche 9 anliegt. Innerhalb der oberen Kammer 4 weist der Quersteg 5 eine ebene Auflagefläche 12 für die Schraubenköpfe auf.

Der Trägerkörper 13 der Führungsschiene 14 gemäß den Figuren 2 und 3 ist grundsätzlich ebenso aufgebaut, wie der Trägerkörper 1 nach Figur 1. Jedoch weist dieser Trägerkörper 13 zwei parallele Aufnahmenuten 2 für zwei parallele Laufschienen 15 auf. Auch diese Aufnahmenuten 2 haben einen Nutgrund, der beim Einklemmen der Laufschiene 15 eine plastische Verformung des Werkstoffs des Trägerkörpers 13 (Maßkalibrieren) ermöglicht. Die obere Kammer 4 dient dazu, einen sehr hohen plastischen Verformungsgrad für das Maßkalibriem zu ermöglichen und den größten Anteil der Verformung aufzunehmen.

### Bezugszahlenliste

- 1: Trägerkörper
- 2: Aufnahmenut
- 3: untere Kammer
- 4: obere Kammer
- 5: Quersteg
- 6: Außenwand
- 7: Außenwand
- 8: Freistellung
- 9: Fußfläche
- 10: Bohrung
- 11: Bohrung
- 12: Auflagefläche
- 13: Trägerkörper
- 14: Führungsschiene
- 15: Laufschiene

## Patentansprüche

1. Führungsschiene für rollende Lastenträger mit einem als stranggepreßtes Hohlkammerprofil ausgebildeten Trägerkörper (1, 13) und wenigstens einer in einer Aufnahmenut (2) des Trägerkörpers (1, 13) angeordneten Laufschiene (15), wobei der Hohlraum des Trägerkörpers (1, 13) durch einen Quersteg (5) in eine untere Kammer (3) und eine obere Kammer (4) aufgeteilt ist und an dem Trägerkörper (1, 13) eine Außenwand (6) der unteren Kammer (3) parallel zu dem Quersteg (5) verläuft, **dadurch gekennzeichnet, daß** die an die Aufnahmenut (2) des Trägerkörpers (1, 13) grenzende hohle obere Kammer (4) mittels einer weiteren, zu dem Quersteg (5) parallelen Außenwand (7) des Trägerkörpers (1, 13) verschlossen ist, wobei
die an die Aufnahmenut (2) des Trägerkörpers (1, 13) grenzende hohle obere Kammer (4) in Verbindung mit dem Nutgrund der Aufnahmenut (2) einen Teil der plastischen Deformation beim Maßkalibrieren aufnimmt.

2. Führungsschiene nach Anspruch 1, **dadurch gekennzeichnet, daß** an dem Trägerkörper (13) zwei oder mehrere parallele Laufschienen (15) in Aufnahmenuten (2) angeordnet sind.

3. Führungsschiene nach Anspruch 1, **dadurch gekennzeichnet, daß** der Trägerkörper (1, 13) aus einer Aluminiumlegierung besteht.

4. Führungsschiene nach Anspruch 1, **dadurch gekennzeichnet, daß** die Laufschiene (15) eine Stahlschiene ist.

5. Führungsschiene nach Anspruch 1, **dadurch gekennzeichnet, daß** die Laufschiene (15) aus einem hochfesten verschleißarmen Werkstoff hergestellt ist.

6. Führungsschiene nach Anspruch 1, **dadurch gekennzeichnet, daß** die Außenwand (6) der unteren Kammer (3) und die Außenwand (7) der oberen Kammer (4) sowie der Quersteg (5) mehrere Gruppen von fluchtenden Bohrungen (10, 11) für jeweils eine Befestigungsschraube aufweisen.

7. Führungsschiene nach Anspruch 1, **dadurch gekennzeichnet, daß** der Quersteg (5) eine die obere Kammer (4) begrenzende ebene Auflagefläche (12) für die Schraubenköpfe der Befestigungsschrauben aufweist.

## Claims

1. Guide rail for rolling load carriers comprising a carrier body (1, 13) made as an extruded hollow chamber profile and at least one running rail (15) arranged in a reception groove (2) of the carrier body (1, 13), the hollow chamber of the carrier body (1, 13) being divided by a cross-web (5) into a lower chamber (3) and an upper chamber (4), with an outer wall (6) of the lower chamber (3) of the carrier body (1, 13) extending parallel to the cross-web (5), **characterized in that** the hollow upper chamber (4) adjacent to the reception groove (2) of the carrier body (1, 13) is closed by a further, outer wall (7) of the carrier body (1, 13) extending parallel to the cross-web (5) and,
in conjunction with the groove bottom of the reception groove (2), the hollow upper chamber (4) adjacent to the reception groove (2) of the carrier body (1, 13) absorbs a part of the plastic deformation taking place during calibration.

2. Guide rail according to claim 1, **characterized in that** two or more parallel running rails (15) are arranged in reception grooves (2) of the carrier body (1, 13).

3. Guide rail according to claim 1, **characterized in that** the carrier body (1, 13) is made of an aluminium alloy.

4. Guide rail according to claim 1, **characterized in that** the running rail (15) is a steel rail.

5. Guide rail according to claim 1, **characterized in that** the running rail (15) is made of a high-strength low-wear material.

6. Guide rail according to claim 1, **characterized in that** several groups of aligned bores (10, 11) are provided in the outer wall (6) of the lower chamber (3), the outer wall (7) of the upper chamber (4) and in the cross-web (5) for respective fixing screws.

7. Guide rail according to claim 1, **characterized in that** the cross-web (5) comprises a flat support surface (12) for the screw heads of the fixing screws which delimits the upper chamber (4).

## Revendications

1. Rail de guidage pour des porte-charges roulants comprenant un corps de support (1, 13) configuré sous la forme d'un profilé extrudé à chambre creuse et au moins un rail de roulement (15) agencé dans une rainure de réception (2) du corps de support (1, 13), la chambre creuse du corps de support (1, 13) étant divisée par une traverse (5) en une chambre inférieure (3) et une chambre supérieure (4), alors qu'une paroi extérieure (6) de la chambre inférieure (3) du corps de support (1, 13) s'étend parallèlement à la traverse (5), **caractérisé en ce que** la chambre supérieure (4) creuse voisine à la rainure de réception (2) du corps de support (1, 13) est fermée par une autre paroi extérieure (7) du corps de support (1, 13) qui est parallèle à la traverse (5), et que,
conjointement avec le fond de la rainure de réception (2) du corps de support (1, 13), la chambre supérieure (4) creuse voisine à la rainure de réception (2) absorbe une partie de la déformation plastique qui a lieu lors du calibrage.

2. Rail de guidage selon la revendication 1, **caractérisé en ce que** deux ou davantage de rails de roulements (15) parallèles sont agencés sur le corps de support (13) dans des rainures de réception (2).

3. Rail de guidage selon la revendication 1, **caractérisé en ce que** le corps de support (1, 13) est fait en un alliage de l'aluminium.

4. Rail de guidage selon la revendication 1, **caractérisé en ce que** le rail de roulement (15) est un rail en acier.

5. Rail de guidage selon la revendication 1, **caractérisé en ce que** le rail de roulement (15) est réalisé en un matériau à résistance élevée et à faible usure.

6. Rail de guidage selon la revendicatin 1, **caractérisé en ce que** la paroi extérieure (6) de la chambre inférieure (3) ainsi que la paroi extérieure (7) de la chambre supérieure (4) et la traverse (5) comprennent plusieurs groupes d'alésages alignés (10, 11) destinés, chacun, à une vis de fixation.

7. Rail de guidage selon la revendication 1, **caractérisé en ce que** la traverse (5) comprend une surface plane d'appui (12) pour les têtes de vis des vis de fixation, ladite surface délimitant en même temps, la chambre supérieure (4).
